Europäisches Patentamt

(19) European Patent Office

Office européen des brevets

(11) Publication number: **0 008 543**
**B1**

(12) **EUROPEAN PATENT SPECIFICATION**

(45) Date of publication of patent specification: **09.05.84**

(21) Application number: **79301745.0**

(22) Date of filing: **24.08.79**

(51) Int. Cl.³: **G 11 B 3/70, B 29 D 17/00,
H 04 N 5/76**

(54) **Method for moulding a videodisc composition.**

(30) Priority: **28.08.78 US 937221
18.04.79 US 31206**

(43) Date of publication of application:
**05.03.80 Bulletin 80/5**

(45) Publication of the grant of the patent:
**09.05.84 Bulletin 84/19**

(84) Designated Contracting States:
**AT BE CH DE FR GB IT LU NL SE**

(56) References cited:
**DE - A - 2 427 464
DE - A - 2 618 773
DE - A - 2 853 262
DE - B - 2 443 020
FR - A - 2 354 607
FR - A - 2 384 404**

**Information Display Vol. 12 no. 2 (1976)
Kunststoff-Handbuch (Carl Hansen Verlag
München 1975) Vol. IX
Encyclopedia of Polymer Science and
Technology (Interscience 1964) Vol.**

(73) Proprietor: **DISCOVISION ASSOCIATES
P.O. Box 6600 3300 Hyland Avenue
Costa Mesa California 92626 (US)**

(72) Inventor: **Holmes, John R.
9661, Blake Avenue
Garden Grove California 92644 (US)**

(74) Representative: **Arthur, George Fitzgerald et al,
KILBURN & STRODE 30, John Street
London WC1N 2DD (GB)**

Courier Press, Leamington Spa, England.

## Description

The present invention relates to a method for moulding a component of a video-disc from optically-clear material useful as a protective, transmissive layer for an impinging light beam.

In a typical disc, the information indicia can be described as light reflective and light non-reflective elements positioned sequentially in track-like fashion on a surface of the video-disc member to represent the frequency modulated signal. The frequency bandwidth extends from 0.25 Mz to 10 Mz. The signal may represent a composite video signal which contains both a chrominance signal and the luminance signal Such discs are disclosed in Information Display, Vol. 12, No. 2 (1976), "A Review of the MCA Disco-Vision System."

An object of the invention is to improve the quality of the information that can be recovered.

The radial error tracking signal can be improved by providing improved clarity and birefringence in the thick videodisc body through which the reading beam passes prior to impinging upon the information indicia carried thereby. Typical videodisc members have a thickness falling within the range of 0.101 mm to 2.5 mm. The birefringence of such a substrate body is measured in nanometers. A nanometer is a measure of the optical retardation and distortion of light as it passes through a transparent body. The birefringence should be not too high and reasonably uniform over the surface.

It is desirable that the discs are flat rather than umbrella shaped in cross section, or crowned. A bad disc might have a crown of 10 mm.

The disc should not be too brittle or subject to easy surface scratching and the generation of internal stress lines which result in surface cracks. Also splay marks, blisters and other surface imperfections are undesirable.

According to the invention some or all of these desiderata are achieved to at least some extent by making an optically clear component of a disc by a method comprising the steps of:— preparing a material including at least 85% by weight of PMMA and having a melt flow rate in the range of 20 to 23 grams per 10 minutes as measured by ASTM No. D1238 Condition 1, said material having essentially no monomers and essentially no foreign particles larger than about 10 microns; drying said material to remove all removable water; heating said material to between 266°C and 293°C such that the breakdown of the PMMA is minimised; and injection moulding said heated material to form said component. The component has reasonably uniform density and a birefringence of no more than 20 nanometers over the information carrying area of the disc.

PMMA is polymethylmethacrylate and may be specially prepared possibly with from 5% to 15% by weight of acrylic rubber or another impact modifier in an extrusion machine. A suitable extrusion machine for this purpose is one having a two-stage vented, 36—1 ratio of length to diameter screw. Another suitable extrusion machine is a twin screw co-rotating European type which is well known in the art. The reextruded material is cooled and repelletised and stored for future use as the starting compound for the injection moulding machine. The preparation may involve including a lubricant with the PMMA.

The pelletised material is given an extended drying step for removing all removable traces of water. The dried recompounded material is removed from the drying chamber immediately before use in the injection moulding process. Improved results were noted when the duration of the injection moulding cycle was within a range of 0.5 to 2.0 seconds.

Brief Description of the Figures

FIGURE 1a is a block diagram of a prior art videodisc player showing the relationship of the video disc with the remainder of the electronics used in the player;

FIGURE 1b shows a greatly enlarged, schematic view of a portion of the video disc shown in Figure 1a;

FIGURE 2 is a partial sectional and perspective view of a videodisc structure shown in Figure 1a;

FIGURE 3 shows a radial cross-sectional view taken along the line 3—3 of the videodisc shown in Figure 2 and includes a side elevational view of the objective lens shown in Figure 1;

FIGURE 4 is a radial cross-sectional view illustrating a second embodiment of such a videodisc structure;

FIGURE 5 is a radial cross-sectional view illustrating a third embodiment of such a videodisc structure;

FIGURE 6 is a pictorial representation of the preferred process in formulating the composition of material for making an optically clear, plastic member useful as a videodisc structure;

FIGURE 7 is an enlarged view of a portion of surface of the videodisc member shown in Figure 1; and

FIGURE 8 is a cross-sectional view of a record being read through an optically clear view member made according to the teaching of this invention.

Referring to Figure 1a, there is shown a schematic block diagram of an optical system 2 employed in a typical prior art videodisc player system. The optical system 2 includes a read laser 3 employed for generating a read beam 4 which is used for reading a frequency modulated encoded signal stored on a videodisc 5. The read beam 4 is polarized in a predetermined direction. The read beam 3 is directed to the videodisc 5 by the optical system 2. An additional function of the optical system 2 is to image the light beam to a spot 6 at its point of impingement with the videodisc 5.

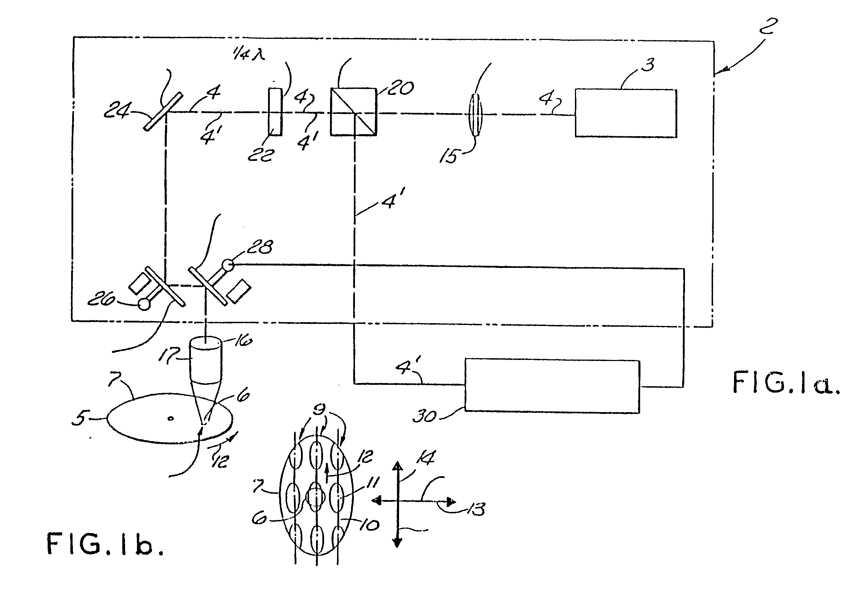

An enlarged view of a portion of an information bearing surface 7 of the videodisc 5 is shown in Figure 1b. Each of a plurality of information tracks is generally indicated by a line 9 which is drawn through a plurality of successively positioned light reflective members 10 and light non-reflective members 11. The detailed description of these members 10 and 11 are given hereinafter. The clockwise direction of rotation of the disc 5 under the stationary read beam 4 is indicated by the head on an arrow 12. The read beam 4 has two degrees of movement, the first of which is in the radial direction as indicated by a double headed arrow 13. The second of which is the tangential direction as indicated by a double headed arrow 14. The double heads of each of the arrows 13 and 14 indicate that the read beam 4 can move in both directions in each of the radial directions and the tangential direction.

The optical system 2 further comprises a lens 15 employed for shaping the beam 4 to fully fill an entrance aperture 16 of a microscopic objective lens 17. The objective lens is employed for forming the spot 6 of light at its point of impingement with the regions 10 and 11 of the information track 9. Improved results have been found when the entrance aperture 16 is overfilled by the reading beam 4. This results in maximum light intensity at the spot 6.

After the beam 4 is properly formed by the lens 15, it passes through a beam splitting prism 20. The transmitted portion of the beam 4 is applied through a quarterwave plate 22 which provides a forty-five degree shift in polarization of the incident light forming the beam 4. The read beam 4 next impinges upon a fixed mirror 24 which redirects the read beam 4 to a first articulated mirror 26. The function of the first articulated mirror 26 is to move the light beam in a first degree of motion which is tangential to the surface 7 of the videodisc 5 to correct for time base errors introduced into the reading beam 4 because of eccentricities in the manufacture of the disc 5. The tangential direction is in the forward and/or backward direction along the information track 9 on the videodisc 5 as indicated by the double headed arrow 14.

The first articulated mirror 26 directs the light beam to a second articulated mirror 28. The second articulated mirror 28 is employed as a radial tracking mirror. It is the function of the tracking mirror 28 to respond to a composite tracking error signal by slightly changing its physical position with relation to the read beam 4 to control the point of impingement 6 of the read beam 4 for radially tracking the information carrying members 10 and 11 along a single information track 9. The second articulated mirror 28 has one degree of movement which moves the light beam in a radial direction over the surface of the disc 5 in the direction indicated by the double headed arrow 13. The read beam 4 now impinges upon the entrance aperture 16, as previously described, and is focused to a spot 6 upon the information track 9 of the videodisc 5 by the lens 17.

In the normal playing mode, the focused beam of light impinges upon successively positioned light reflective regions 10 and light non-reflective members 11 representing the frequency modulated information. In the preferred embodiment, the light non-reflective members 11 are light scattering elements carried by the videodisc 5. The reflected beam 4' is a modulated light beam and the reflected beam is identified at 4'. The modulated reflected beam 4' is a light equivalent of the frequency modulated signal represented by the light reflective and light non-reflective members 10 and 11 positioned in the track 9. This modulated light beam is gathered by the microscopic objective lens 17 as it is reflected from the successively positioned light reflective members 10 and light non-reflective members 11 on the videodisc 5. The reflected read beam 4' retraces a portion of the same path previously described for the impinging read beam 4. This path includes sequential reflection from the second articulated mirror 28, the first articulated mirror 26, and the fixed mirror 24. This common path in the read optical system 2 is identified by using both the numeral 4 for the incident light beam and the numeral 4' for the reflected beam. The reflected read beam 4' next passes through the quarterwave plate 22. The quarterwave plate 22 provides an additional forty-five degree polarization shift resulting in a total of ninety degree shift in polarization of the reflected read beam 4' with respect to the incident read beam 4. The reflected read beam 4' now impinges upon the beam splitting prism 20, which prism diverts the ninety degree phase shifted reflected read beam 4' to impinge upon a tracking error signal recovery circuit indicated generally at 30. The circuit 30 generates the radial tracking error signal identified hereinafter.

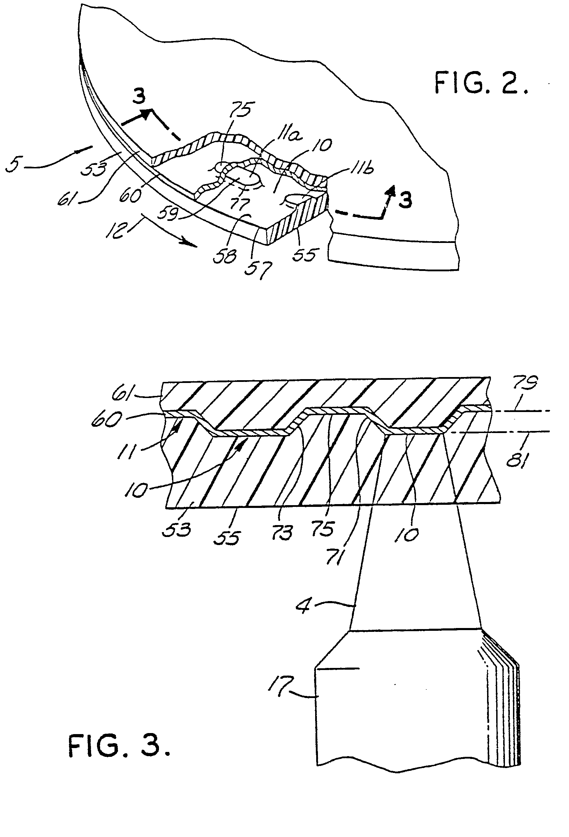

Referring to Figure 2, there is shown a partial sectional and perspective view of a videodisc member 5. The videodisc 5 includes a substrate member 53 having a first or entrance surface at 55 and a second or information bearing surface 57. The upper surface 57 includes a planar-shaped surface portion 58 which includes segments 10 which function as the light reflective portion of an information track 9. The upper surface 57 further includes nonplanar shaped surface regions 59 which function as the light scattering members 11 of an information track. Each of the light reflective segments 10 is positioned between a pair of light scattering regions such as 11a and 11b.

A highly reflective layer 60 is formed over the surface 57 and a protective coating 61 is formed over the highly reflective layer 60.

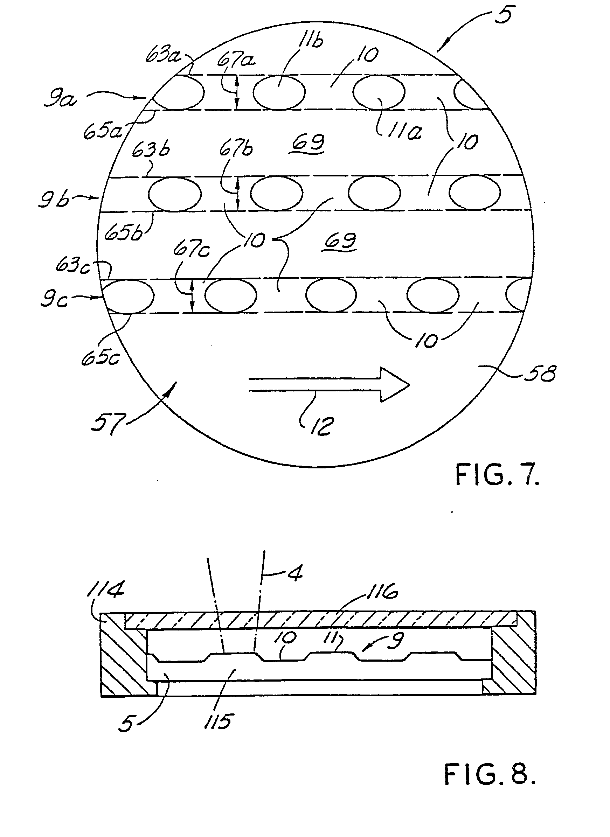

Referring to Figure 7, there is shown a schematic view of a portion of the information bearing surface 57, including a plurality of tracks 9a, 9b and 9c. Each of the information tracks is a ring-shaped area lying between pairs of construction lines 63 and 65. Track 9a is generally lying between pairs of construction lines 63a and 65a, track 9b is generally lying between construction lines 63b and 65b, and track 9c is generally lying between construction lines 63c and 65c.

The width of each of the ring-shaped areas 9a, 9b and 9c is in the radial direction and this width dimension is indicated by the length of a line 67a, 67b and 67c, respectively. The length of the ring-shaped areas 9a, 9b, and 9c is in the circumferential direction and varies according to the radius of the ring-shaped member according to the well known formula $2\pi R$.

The planar-shaped portion 58 of the information storage surface 57 further includes planar-shaped intertrack guard regions 69 for separating adjacent tracks such as 9a and 9b. In this top view of an information track such as 9a, the planar reflective regions are shown as 10 and the scattering regions are shown as 11. In the embodiment shown in Figures 2 and 3, the light scattering regions 11 are shown as trapezoidal in cross section having a leading edge 71 and a trailing edge 73, and a planar-shaped upper surface in the form of an oval. As shown in Figure 2, the light scattering regions 11 having the trapezoidal cross section is shown as a frustum of an oval cone, having its surface 59 including an oval-shaped upper surface 75 and a side surface 77.

Referring to Figure 3 alone, the upper surfaces 75 of all light scattering members 11 are shown terminated in a single plane indicated by a line 79. All light reflective regions 10 are shown terminated in a single plane indicated by a line 81. The highly reflective layer 60 is covered with the protective layer 61. By observation it can be noted that the protective layer 61 is substantially thinner than the substrate body 53. The objective lens, shown in side elevation, images the read beam 4 upon a light reflective region 10.

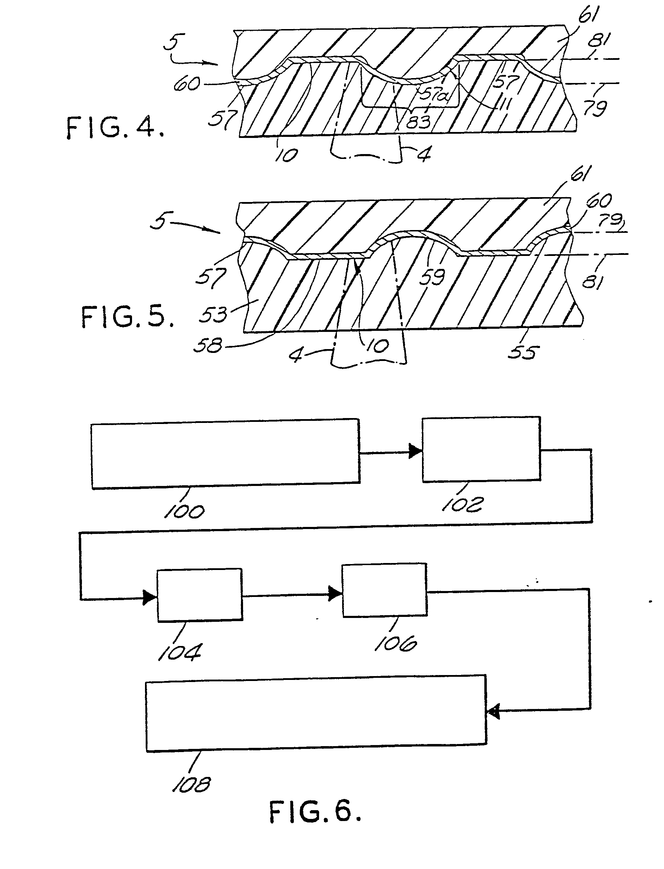

Referring to Figure 4, there is shown a substantially identical cross-sectional view of a videodisc structure 5 except that the light scattering region 11 is shown as a depression from the surface 57 and is represented as a semicircular line 57a lying between the brackets 83. In a perspective view (not shown), the depression is seen as a hemisphere-shaped void in the surface 57. The read beam 4 is shown imaged in part upon a light reflective region 10 and a light scattering region 11.

Referring to Figure 5, there is shown a third embodiment of a videodisc structure 5 suitable for use in the videodisc player shown in Figure 1. The substrate is shown at 53 having a first or entrance surface at 55 and a second or information bearing surface 57. The planar light reflective regions 10 are shown at 58. The light scattering regions 11 are shown as curved-shaped surface regions 59. The reflective layer 60 is formed over the upper surface 57. A protective layer 61 is shown formed over the reflect-layer 60. The objective lens images the read beam 4 partially upon a planar-shaped light reflective portion 58 of the information bearing surface 57 and partially upon the curved-shaped portion 59 of the information bearing surface 57.

There now follow descriptions of methods of forming clear discs, some of which embody the invention and some of which do not.

#### Example Number 1

A videodisc structure is formed using PMMA without any special preparation as the moulding material. The moulding temperature of the injection moulding cycle is set at 249°C and the injection moulding cycle time is two seconds. The first moulding temperature is set at that temperature recommended by the manufacturer of the injection moulding material.

The injection moulded videodisc structure manufactured in this manner was inspected and found to be of substantially umbrella form having a raised crown of approximately ten millimeters. The measured values of birefringence ranged from a minimum of four nanometers at the outer radius to a maximum of one hundred nanometers at the centre of the disc. The videodisc structure was found to be very brittle with a number of surface marks. It broke when bent to a three and one-half inch radius.

Examples Numbers 2—8 hereinafter, were prepared using PMMA without any special preparation.

#### Example Number 2

The composition for the injection moulding cycle was kept at all PMMA. The temperature of the melt was raised to 280°C and the injection time was held at two seconds. A videodisc structure made according to this procedure was found to be nearly flat having a two millimeter crown. The value of birefringence was found to begin with a minimum of four nanometers at the outer radius and increased to a maximum of thirty nanometers at the centre of the disc. The videodisc remained brittle with some surface marks.

#### Example Number 3

The composition of the injection melt was one hundred percent PMMA. The temperature of the melt was kept at 280°C while the injection time was reduced to one second. This resulted in a substantially flat video disc structure having a zero millimeter crown. The value of birefringence was measured at a low of four nanometers at the circumferential edge of the disc to 15 nanometers at the central part of the disc. The videodisc structure was rather brittle with some surface marks.

This test showed that a reduced injection time is possible because of the high temperature of the injection melt. This high temperature provides reduced resistance to the flow of the melt into the moulding cavity.

This test also showed that higher temperatures of the injection melt and reduced injection time increased brittleness and resulted in increased surface imperfections.

### Example Number 4

The material for making the videodisc structure is changed to a composition comprising 93% PMMA and 10% acrylic rubber. The melt is maintained at 280°C and the injection cycle time is maintained at 0.5 seconds.

The videodisc member made according to this procedure is essentially flat having no measurable crown. The birefringence value is essentially uniform over the entire surface of the disc; there being no measurable differences noted at any radius. The disc member continues to be brittle breaking at a three inch radius. There are surface marks.

During play on a player as shown in Figure 1, increased noise is measured on the radial tracking error signal. It is finally diagnosed that the original of the increased noise in the radial tracking error is caused by lack of dispersion of the acrylic rubber into the PMMA by use of the standard extrude carried by the injection moulding machine. Such a standard extruder employs a ratio of 24 to 1 length to diameter ratio.

### Example Number 5

The composition is changed to comprise 91% PMMA and 9% acrylic rubber. The melt temperature is kept at 280°C and the injection cycle time is maintained at 0.5 seconds. The resulting disc is measured with a two millimeter crown. Value of birefringence are measured from two through twenty nanometers from the outer radius to the central radius used for storage of information, respectively. The disc is less brittle and passes the two inch radius test without breaking. Surface blemishes are still noted.

### Example Number 6

The composition for the videodisc is maintained at 92% PMMA and 8% acrylic rubber. The melt is temperature is raised to 293°C and the injection time is maintained at 0.5 seconds. The resulting videodisc member does not exhibit a measurable crown effect. Value of birefringence are measured varying from four nanometers at the outer radius to ten nanometers at the innermost information bearing radius, respectively. The videodisc member continues to pass the two inch radius bend test and surface blemishes are still noted. The surface blemishes include splay marks, blisters and other marks. It is noted that the melt temperatures are well above the maximum of 249°C recommended by the manufacturer. After further testing, it is theorised that water vapor in the melt could account for the surface imperfection. The next test run is preceded by an extended drying period of twenty-four hours. This is eight times longer than recommended by the manufacturer.

### Example Number 7

The composition of material used to form the videodisc member is dried for twenty-four hours. This composition comprises 92% PMMA and 8% acrylic rubber. The melt temperature is maintained at 293°C and the injection time is maintained at 0.5 seconds.

The result videodisc member is essentially flat having no measurable crown. The values of birefringence vary from four nanometers at the outer radius and increasing to ten nanometers at the inner radius. The disc member maintains its more flexible condition by passing the two inch radius bend test. The videodisc member made according to this process is free of surface blemishes. The radial tracking signal continues to exhibit excessive noise. This sample showed that an extended drying time eliminates surface imperfections in the composition at the high temperature employed.

### Example Number 8

The preferred percentages of each ingredient for making the videodisc members are recompounded in a reextrusion machine for this example. The preferred composition being 8% acrylic rubber and 92% PMMA. The preferred reextrusion machine is one having a two-stage vented, 36—1 ratio of length to diameter screw. The reextruded material is allowed to cool and is repelletised. The repelletised material is given an extended drying time prior to use in the injection moulding machine. In the repelletised state it is then added into the injection moulding machine through the mixing nozzle. The melt temperature is maintained at 293°C and the injection cycle time is maintained at 0.5 seconds. The videodisc member manufactured according to this process is essentially flat, having no measureable crown. The values of birefringence are essentially flat, having a measurable difference of six nanometers over the surface of the videodisc member. A value of four nanometers is measured at the outer radius and a value of ten nanometers is measured at the inner radius. The disc member passes the two inch radius bend test. No surface blemishes are noted and the radial tracking signal is considerably less noisy than that detected in the disc manufactured according to Example Number 7.

There now follows a discussion of some general features of the materials used.

Other clear plastic mixtures or polyblends of the base resin PMMA (polymethyl methacrylate) useable in the present invention include: PVC (polyvinyl chloride) in its various molecular weights; polyvinylidine flouride (fluoro carbon) such as Kynar; Ionomers such as Surlyn; Styrene copolymers such as SAN (styrene acrylonitrile); liquid plasticizers such as DOP (dioctylphthalate) or DMP (dimethyl phthalate).

It has been found that a plastic videodisc structure may be produced from PMMA only, and have properties which are at least as good as plastic videodisc structures prepared from the preferred compositions of PMMA and acrylic rubber, if the PMMA is specially prepared to provide a melt-flow rate, particle count, size stability, a monomer free system and lubrication system as described hereinafter.

## Melt-Flow Rate

The PMMA is processed to have a melt-flow rate of about 20 to about 23 grams per ten minutes as measured by ASTM number D 1238 condition I. At lower melt-flow rates, the polymer is more viscous and requires an increase in pressure to force the polymer to flow into the mold. The increased pressure results in a difference in density of the polymer in the disc which results in warping of the disc into an umbrella shape after release from the mold. At the desired melt-flow rate as aforesaid, the density of the polymer in the disc is substantially uniform with a result that after release from the mold, the disc will not warp and has a relatively low and uniform birefringence.

At melt-flow rates which are higher than the desired rate, the environmental properties of the plastic disc member are unacceptable, e.g., the plastic is too brittle and melts at relatively low temperatures, and has relatively low hardness, rigidity, and tensile strength.

If the desired melt-flow rate causes any undue brittleness in the disc, such brittleness can be minimized by making the disc thicker. The disc can be made thicker by either making the mold thicker or by fabricating two discs into one disc.

## Particle Size

Foreign particles in PMMA will cause light beams to deflect when passing through the disc and should be eliminated. This can be accomplished by not adding ultraviolet absorbers, toners, or other foreign particles to the polymer during its manufacture, or by filtering the polymer so that the size of the particles in the PMMA are not more than 1 to 10 microns.

## Monomers and Stability

The presence of PMMA monomers in the polymer is to be eliminated because such monomers cause blistering of the disc during molding and blistering of the aluminium reflective coat after vacuum metalizing. PMMA monomers may also be produced during molding if the polymer breaks down. Accordingly, the polymer should be stable and not subject to degradation under the processing or molding conditions described herein.

## Lubrication

A suitable lubricant is admixed with PMMA to permit the disc structure to be easily removed from the mold. The lubricant should be selected to have a vapor pressure below the molding temperature to avoid loss of the lubricant which would otherwise splash on and blemish the surface of the disc when the mold is open. Examples of suitable lubricants as aforesaid are: Stearyl alcohol, stearic acid, metal stearates, such as zinc or calcium stearate, crystalline paraffin waxes, and Montan waxes.

The lubricant should be used in the amount of about 0.5% to about 0.8% by weight of plastic to allow for ease of release from the mold and sufficient adhesion between the plastic disc and the vacuum deposited aluminium.

The other base resins enclosed herein may also be prepared to achieve the same characteristics as the specially prepared PMMA described hereinabove, and in so doing, the impact acrylic rubber may be omitted from their manufacture. The other base resins disclosed herein, however, may have physical properties different from PMMA and may require routine adjustments for the injection molding process or apparatus to accommodate each specific material.

Referring to Figure 6, there is shown a schematic representation of the method of fabricating an optically clear member according to the teachings of the present invention. When an impact modifier is used, the first step, indicated by a block 100, is the thorough mixing of the clear, plastic material, with the material selected as the impact modifier. This mixing provides a mechanical distribution of the impact modifier within the clear, plastic material. Once the mechanical dispersion of the impact modifier within the clear plastic material is completed, the resulting mixture is melted to provide the best possible molecular dispersion of the two ingredients. If an impact modifier is not used, the plastic is simply melted. In either event, the melt, with or without an impact modifier, is extruded in the two stage vented reextrusion machine or the twin screw, corotating European type of extrusion machine, to provide an extrusion of the melt as indicated by a block 102. The reextruded plastic is ground up and/or repelletized as indicated by block 104 for putting the reextruded plastic in a form convenient for use with an injection molding machine.

A block 106 indicates that that repelletized material is thoroughly dried for removing the maximum amount of water therefrom. Drying times that have been found useful for this step lie within the range of twenty-four to forty-eight hours immediately prior to injection molding. A block 108 represents the final step of injection molding the dried plastic at a temperature selected within a range of 266°C to 293°C.

Referring to Figure 8, there is shown a sectional view of an optically readable member 5 having a single information track 9 shown in cross section. The information track 9 comprises light reflective regions 10 and light scattering regions 11. The member 112 is mechanically joined with a spacer member 114 which also mechanically holds an optically clear view member 116 which is made pursuant to the teachings of the present invention. A reading beam 4 is shown imaged upon a light scattering member 11. In this embodiment, the optically clear member 116 operates a dust cover of general protective sheet member to protect the member 5 from the environment. It is essential that the optically clear member 116, shown as being of uniform thickness over its entire length, is of such composition as to not interfere with the intensity-directivity and/or focus of the read beam 4. In this embodiment, the reading of the videodisc member 5 is achieved by placing the optically clear member 116 intermediate the source of the read beam 4 and the videodisc member 5 and imaging the read beam 4 upon the information track 9.

While presently preferred embodiments have been described in detail, it should be appreciated that the invention is not to be limited except by the claims.

**Claims**

1. A method of making an optically clear component of an information carrying disc, through which the information may be optically read, the component having uniform density and a birefringence of no more than 20 nanometers over the information carrying area of the disc, said method comprising the steps of: preparing a material including at least 85% by weight of PMMA and having a melt flow rate in the range of 20 to 23 grams per 10 minutes as measured by ASTM No. D1238 Condition 1, said material having essentially no monomers and essentially no foreign particles larger than about 10 microns; drying said material to remove all removable water; heating said material to between 266°C and 293°C such that the breakdown of the PMMA is minimised; and injection moulding said heated material to form said component with said uniform density and birefringence.

2. The method as claimed in Claim 1, wherein said preparing step includes mixing from 5% to 15% by weight of an impact modifier to said PMMA.

3. The method as claimed in Claim 1 or Claim 2, wherein said injection moulding step is accomplished in a cycle having a moulding time between 0.5 and 2 seconds.

4. The method as claimed in Claims 1, 2 or 2, wherein said preparing step includes mixing between 0.5% and 0.8% by weight of a lubricant with said PMMA.

**Revendications**

1. Procédé de production d'un composant optiquement transparent d'un disque porteur de l'information, par lequel l'information peut être optiquement lue, le composant ayant une densité uniforme et une biréfringence ne dépassant pas 20 nanomètres sur la zone du disque qui porte l'information, ledit procédé comprenant les étapes de: préparer un matériau comprenant au moins 85% en poids de PMMA et ayant un taux d'écoulement à l'état fondu compris entre 20 et 23 grammes pour 10 minutes en mesurant par ASTM N° D1238 condition 1, ledit matériau n'ayant essentiellement pas de monomères et essentiellement pas de particules étrangères de plus d'environ 10 microns; sécher ledit matériau pour retirer toute l'eau pouvant être enlevée; chauffer ledit matériau entre 266 et 293°C de façon à diminuer la rupture du PMMA; et mouler par injection ledit matériau chauffé pour former ledit composant ayant ladite densité uniforme et ladite biréfringence.

2. Procédé selon la revendication 1, où ladite étape de préparation consiste à mélanger de 5% à 15% en poids d'un modificateur de l'impact, audit PMMA.

3. Procédé selon la revendication 1 ou 2, où ladite étape de moulage par injection est accomplie dans un cycle ayant un temps de moulage compris entre 0,5 et 2 secondes.

4. Procédé selon la revendication 1, 2 ou 3, où ladite étape de préparation consiste à mélanger entre 0,5% et 0,8% en poids d'un lubrifiant audit PMMA.

**Patentansprüche**

1. Verfahren zum Herstellen einer optisch klaren Komponente einer informationstragenden Scheibe, durch welche die Information optisch gelesen werden kann, wobei die Komponente eine gleichmäßige Dichte und eine Doppelbrechung von nicht mehr als 20 nm gegenüber der informationstragenden Fläche der Scheibe aufweist, welches Verfahren die Schritte des Herstellens eines Materials umfassend zumindest 85 Gew.% PMMA und mit einer Schmelzflußrate im Bereich von 20 bis 23 g pro 10 min, gemessen durch ASTM Nr. D1238 Bedingung 1, welches Material im wesentlichen keine Monomeren und im wesentlichen keine Fremdteilchen, die größer als etwa 10 $\mu$m sind, besitzt; des Trocknens dieses Materials zur Entfernung allen entfernbaren Wassers; das Erhitzen dieses Materials auf 266 bis 293°C derart, daß das Zersetzen des PMMA minimal gehalten wird; und Spritzformen dieses erhitzten Materials zur Bildung der genannten Komponente mit der genannten gleichmäßigen Dichte und Doppelbrechung umfaßt.

2. Verfahren wie in Anspruch 1 beansprucht, wobei der Herstellungsschritt das Mischen von 5 bis 15 Gew.% eines Schlagmodifikators mit dem PMMA umfaßt.

3. Verfahren wie in Anspruch 1 oder 2 beansprucht, worin der Spritzformschritt in einem Zyklus mit einer Formzeit zwischen 0,5 und 2 s bewerkstelligt wird.

4. Verfahren wie in den Ansprüchen 1, 2 oder 3 beansprucht, worin der Herstellungsschritt das Mischen von 0,5 bis 0,8 Gew.% eines Schmiermittels mit dem PMMA umfaßt.

FIG.1a.

FIG.1b.

1

FIG. 2.

FIG. 3.

FIG. 4.

FIG. 5.

FIG. 6.

FIG. 7.

FIG. 8.